# DEMANDE DE BREVET EUROPEEN

(11) **EP 4 852 314 A1**
(43) Date de publication de la demande: **09.12.2026**
(21) Numéro de dépôt: 26181395.0
(22) Date de dépôt: 27.05.2026
(51) Int. Cl.: H02S 50/10

(54) **PROCEDE DE CARACTERISATION ELECTRIQUE DE METALLISATIONS DE CELLULES PHOTOVOLTAÏQUES**

(30) Priorité: 05.06.2025 FR 2506092
(71) Demandeur: Commissariat à l'Energie Atomique et aux Energies Alternatives, 75015 Paris (FR)
(72) Inventeur: RODRIGUES LOPES, Gustavo, 38054 GRENOBLE CEDEX 09 (FR); FAVRE, Wilfried, 38054 GRENOBLE CEDEX 09 (FR)
(74) Mandataire: Cabinet Beaumont

(57) **Abrégé**

Procédé de caractérisation électrique de métallisations, comprenant :
- mesures courant - tension (12) sur chacun d'une pluralité d'échantillons photovoltaïques comprenant chacun un nombre n de lignes de métallisation, les échantillons photovoltaïques comprenant, les uns par rapport aux autre, un nombre n différent de lignes de métallisation et/ou des lignes de métallisation de largeurs et/ou de hauteurs différentes, chacun des échantillons photovoltaïques comprenant en outre plusieurs électrodes de mesure espacées les unes des autres en formant différentes valeurs de distance inter-électrodes L pour chacune desquelles une mesure est mise en œuvre ;
- détermination (16), pour chaque échantillon photovoltaïque et à partir des précédentes mesures, d'une fonction *R_{mesurée} (L)* qui est linéaire et définit une valeur de résistance *R_{mesurée}* en fonction de la distance inter-électrodes L ;
- détermination (18), pour chaque échantillon photovoltaïque, d'une valeur *R*'*_{mesurée}* correspondant à la dérivée de la fonction *R_{mesurée} (L).*

## Description

### Domaine technique

La présente description concerne de façon générale le domaine de la caractérisation électrique de métallisations de cellules photovoltaïques, ou cellules PV, et notamment la caractérisation électrique de lignes de métallisation de cellules photovoltaïques.

### Technique antérieure

Une cellule photovoltaïque comporte, sur ses faces avant et arrière, des métallisations destinées à collecter le courant généré dans le matériau actif de la cellule. Ces métallisations comprennent des lignes, ou doigts, reliées électriquement entre elles par des busbars, ou barres omnibus.

Actuellement, la résistance électrique de ces lignes de métallisation, appelée résistance de ligne *R_{ligne},* d'une cellule photovoltaïque est déterminée à partir d'un équipement qui mesure la résistance globale présente entre des extrêmes de la cellule. Cet équipement réalise des mesures courant - tension, ou mesures I-V, consistant à injecter un courant de valeur constante entre deux busbars de la cellule et à mesurer la tension entre ces deux busbars par deux autres électrodes distinctes de celles injectant le courant. La valeur de la résistance de ligne est ensuite calculée à partir de la résistance électrique totale mesurée (qui est égale au rapport de la valeur de la tension mesurée sur celle du courant injecté), en fonction du nombre total de lignes de métallisation de la cellule PV et de la distance entre les busbars utilisés pour les mesures.

Cette méthode est bien adaptée pour la caractérisation électrique de cellules photovoltaïques fonctionnelles. Toutefois, dans le cadre d'une optimisation du procédé mis en œuvre pour réaliser les métallisations, par exemple lorsqu'il est envisagé d'utiliser de nouvelles pâtes de métallisation nécessitant la mise en œuvre d'essais de recuit et/ou la réalisation de motifs des lignes différents, notamment pour déterminer une ouverture d'écran optimale pour chaque pâte de sérigraphie, cette méthode présente des limites. En effet, elle impose la fabrication d'un écran spécifique pour chaque géométrie de métallisations testée, ce qui engendre des coûts et une durée de caractérisation importants, rendant cette méthode peu viable et sensible aux variations de géométrie des lignes de métallisation (coupures de lignes, variations locales de la largeur et hauteur des lignes, etc.) lors d'une phase de développement de nouvelles cellules photovoltaïques. De plus, la méthode standard ne permet pas de différencier, dans la résistance électrique mesurée, la contribution des lignes de métallisation par rapport de celle des matériaux sous-jacents (couches conductrices de type couche sélective, wafer de silicium, couche transparente conductrice, etc.).

### Résumé de l'invention

Il existe un besoin de proposer un procédé de caractérisation électrique de métallisations de cellule photovoltaïque ne nécessitant pas la réalisation d'une cellule photovoltaïque fonctionnelle et qui soit adapté, en termes de coût et de durée, pour une mise en œuvre lors d'une phase de développement de nouvelles cellules photovoltaïques et permettant de distinguer les contributions des métallisations et des matériaux sous-jacents.

Un mode de réalisation pallie tout ou partie des inconvénients des solutions connues et propose un procédé de caractérisation électrique de métallisations, comprenant au moins la mise en œuvre de :
- mesures courant - tension mises en œuvre sur chacun d'une pluralité d'échantillons photovoltaïques comprenant chacun un nombre n de lignes de métallisation de largeur *w₁₀₄* et de hauteur *h₁₀₄,* les échantillons photovoltaïques comprenant, les uns par rapport aux autre, un nombre n différent de lignes de métallisation et/ou des lignes de métallisation de largeurs *w₁₀₄* et/ou de hauteurs *h₁₀₄* différentes, chacun des échantillons photovoltaïques comprenant en outre plusieurs électrodes de mesure espacées les unes des autres en formant différentes valeurs de distance inter-électrodes *L* pour chacune desquelles une mesure courant - tension est mise en œuvre ;
- détermination, pour chaque échantillon photovoltaïque et à partir des précédentes mesures courant - tension, d'une fonction *R_{mesurée} (L)* qui est linéaire et définit une valeur de résistance *R_{mesurée}* en fonction de la distance inter-électrodes *L* ;
- détermination, pour chaque échantillon photovoltaïque, d'une valeur *R'_{mesurée}* correspondant à la dérivée de la fonction *R_{mesurée} (L).*

Selon un mode de réalisation particulier, le procédé comporte en outre, après la détermination de la valeur *R'_{mesurée}* pour chaque échantillon photovoltaïque, une détermination d'une résistivité *ρ*, en Ω.cm, des lignes de métallisation à partir de l'équation : $R {′}_{mesur é e} \left(N\right) = \frac{ρ ⋅ R {′}_{mesur é e} \left(N=0\right)}{ρ + N ⋅ R {′}_{mesur é e} \left(N=0\right)}$ avec *R'_{mesurée} (N=0)* correspondant à la valeur *R'_{mesurée}* pour l'un des échantillons photovoltaïques ne comportant pas de ligne de métallisation, et *R'_{mesurée}* (N) correspondant à la valeur *R'_{mesurée}* pour l'un des échantillons photovoltaïques (100) de paramètre *N* avec *N = n.h₁₀₄.w₁₀₄.*

Selon un mode de réalisation particulier, le procédé comporte en outre, lorsque les échantillons ont un nombre *n* de lignes de métallisation différent les uns des autres et des lignes de métallisation de largeurs *w₁₀₄* et de hauteurs *h₁₀₄* identiques les unes des autres, et après la détermination de la valeur *R'_{mesurée}* pour chaque échantillon photovoltaïque , une détermination de la valeur d'une résistance de ligne *R_{ligne},* en Ω/cm, des lignes de métallisation à partir de l'équation $R {′}_{mesur é e} \left(n\right) = \frac{{R}_{ligne} ⋅ R {′}_{mesur é e} \left(n=0\right)}{{R}_{ligne} + n ⋅ R {′}_{mesur é e} \left(n=0\right)}$ avec *R'_{mesurée} (n=0)* correspondant à la valeur *R'_{mesurée}* pour l'un des échantillons photovoltaïques ne comportant pas de ligne de métallisation, et *R'_{mesurée}(n)* correspondant à la valeur *R'_{mesurée}* pour l'un des échantillons photovoltaïques comportant n lignes de métallisation.

Selon un mode de réalisation particulier, les mesures courant - tension sont mises en œuvre, sur chacun des échantillons photovoltaïques, en appliquant une même valeur de tension entre deux des électrodes de mesure.

Selon un mode de réalisation particulier, le procédé comprend en outre, avant la mise en œuvre des mesures courant - tension, une réalisation des échantillons photovoltaïques.

Selon un mode de réalisation particulier, la réalisation des échantillons photovoltaïques comporte au moins la mise en œuvre des étapes de :
- dépôt, par exemple par sérigraphie à travers au moins un masque, d'au moins une pâte de sérigraphie sur au moins un substrat, formant les métallisations des échantillons photovoltaïques ;
- recuit de la pâte de sérigraphie déposée ;
- découpe du substrat, détachant les échantillons photovoltaïques les uns des autres.

Selon un mode de réalisation particulier, les métallisations des échantillons photovoltaïques sont réalisées avec un unique masque de sérigraphie.

Selon un mode de réalisation particulier, les métallisations comportent du cuivre.

Selon un mode de réalisation particulier, la détermination, pour chaque échantillon photovoltaïque, de la fonction *R_{mesurée} (L)* est réalisée à partir des mesures courant - tension dont les résultats correspondent à des fonctions linéaires et en écartant celles dont les résultats correspondent à des fonctions non-linéaires.

Selon un mode de réalisation particulier, les étapes sont mises en œuvre à partir d'au moins deux échantillons photovoltaïques dont l'un ne comporte pas de ligne de métallisation.

Selon un mode de réalisation particulier, chacun des échantillons photovoltaïques comporte au moins trois électrodes de mesure formant au moins deux distances inter-électrodes différentes.

Selon un mode de réalisation particulier, le procédé comporte en outre un calcul d'une résistance de couche *R_{couche}* selon l'équation : ${R}_{couche} = R {′}_{mesur é e} \left(n=0\right) ⋅ W$ avec W correspondant à une largeur d'un des échantillons photovoltaïques qui ne comporte pas de ligne de métallisation.

Selon un mode de réalisation particulier, le procédé comporte en outre, pour l'un des échantillons photovoltaïque ne comportant pas de ligne de métallisation, un calcul d'une résistance de contact *R_{contact}* selon l'équation : ${R}_{contact} = {R}_{mesur é e} \left(L=0\right) / 2$ avec *R_{mesurée} (L=0)* correspondant à la valeur de la résistance *R_{mesurée}* extrapolée à partir de la fonction *R_{mesurée} (L)* pour une distance inter-électrodes nulle.

Selon un mode de réalisation particulier, chacun des échantillons photovoltaïques comporte un substrat comprenant au moins une couche de semi-conducteur cristallin disposée entre au moins deux couches de semi-conducteur amorphe ou microcristallin, ou entre des contacts à oxyde tunnel passivé.

Selon un mode de réalisation particulier, les lignes de métallisation sont orientées perpendiculaires aux électrodes de mesure.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente des étapes d'un procédé de caractérisation électrique de métallisations de cellule photovoltaïque selon un mode de réalisation particulier ;
la figure 2 et la figure 3 représentent schématiquement des exemples d'échantillons photovoltaïques réalisés lors de la mise en œuvre d'un procédé de caractérisation électrique de métallisations de cellule photovoltaïque ;
la figure 4 représente des exemples de résultats de mesures I-V mises en œuvre au cours d'un procédé de caractérisation électrique de métallisations de cellule photovoltaïque ;
la figure 5 représente des exemples de valeurs de résistance obtenues au cours d'un procédé de caractérisation électrique de métallisations de cellule photovoltaïque ;
la figure 6 représente un exemple de variation de résistance en fonction du nombre de lignes de métallisation obtenue au cours d'un procédé de caractérisation électrique de métallisations de cellule photovoltaïque réalisées sur un substrat électriquement isolant ; et
la figure 7 représente un exemple de variation de résistance en fonction du nombre de lignes de métallisation obtenue au cours d'un procédé de caractérisation électrique de métallisations de cellule photovoltaïque réalisées sur un substrat électriquement conducteur.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Sur les figures, afin de faciliter leur lecture, les différents éléments et les différentes couches de matériaux ne sont pas représentés à la même échelle les uns par rapport aux autres.

Par souci de clarté, seuls les étapes et éléments utiles à la compréhension des modes de réalisation décrits ont été représentés et sont détaillés. En particulier, différents éléments tels que les équipements mesure utilisé ne sont pas détaillés. La personne du métier sera à même de choisir de manière appropriée ces éléments à partir de la description fonctionnelle donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés (en anglais « coupled ») entre eux, cela signifie que ces deux éléments peuvent être connectés ou être reliés par l'intermédiaire d'un ou plusieurs autres éléments. En outre, les termes « couplé », « relié » et « connecté » sont utilisés ici pour désigner des couplages, ou des liaisons, ou des connexions, électriques.

Dans la description qui suit, lorsque l'on fait référence à des qualificatifs de position absolue, tels que les termes « avant », « arrière », « haut », « bas », « gauche », « droite », « latéral », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures dans une position normale d'utilisation.

Sauf précision contraire, les expressions « environ », « approximativement », « sensiblement », et « de l'ordre de » signifient à 10 % près, de préférence à 5 % près.

De même, sans indication contraire, les gammes de valeurs indiquées incluent les bornes de ces gammes.

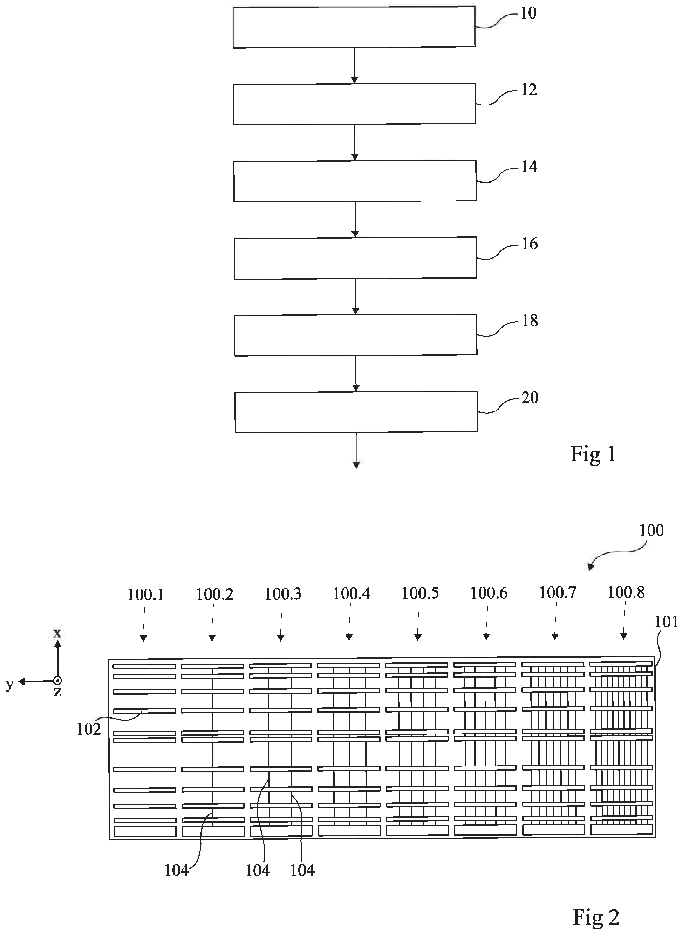

Un premier exemple de procédé de caractérisation électrique de métallisations est décrit ci-dessous en lien avec la figure 1.

Lors d'une première étape 10, plusieurs échantillons photovoltaïques 100, par exemple au moins deux échantillons 100, dotés, sur une de leurs faces principales, de métallisations sont réalisés. Ces échantillons 100 comportent au moins un substrat 101, c'est-à-dire au moins une couche de matériau, sur lequel les métallisations sont réalisées. Selon un exemple, le substrat 101 peut comporter plusieurs couches de matériaux telles que ces échantillons 100 soient structurellement proches ou identiques à l'empilement de couches utilisé pour les cellules photovoltaïques dont les lignes de métallisation sont destinées à être caractérisées. Selon un exemple, lorsque les métallisations caractérisées sont destinées faire partie de cellules photovoltaïques à hétérojonction, le substrat 101 peut comporter au moins une couche de semi-conducteur cristallin dont les deux faces principales sont recouvertes par des couches de semi-conducteur amorphe ou microcristallin. Par exemple, le semi-conducteur de ces couches peut correspondre à du silicium. D'autres structures d'échantillons 100 et/ou d'autres types de substrat 101 peuvent servir de support à la réalisation des métallisations.

Chacun des échantillons 100 comporte des électrodes de mesure 102 identiques d'un échantillon 100 à l'autre. Ces électrodes de mesure 102 sont similaires à des motifs utilisés pour la mise en œuvre d'une mesure TLM (« Transfer Length Method » en anglais, ou méthode de longueur de transfert) servant typiquement à déterminer la conductivité d'une couche de matériau et la résistivité de contact entre cette couche de matériau et les électrodes de mesure.

La figure 2 représente schématiquement un exemple de réalisation, à partir d'un même substrat 101, de huit échantillons, référencés 100.1 à 100.8, comportant chacun plusieurs électrodes de mesure 102, par exemple au moins trois électrodes de mesure 102 pour obtenir au moins deux distances inter-électrodes L différentes. Sur la figure 2, chacun des échantillons 100.1 - 100.8 comporte onze électrodes de mesure 102. Dans l'exemple de la figure 2, chacune des électrodes de mesure 102 a une forme longiligne dont la largeur (dimension parallèle à l'axe X sur la figure 2) est par exemple égale à 1 mm, et dont la longueur (dimension parallèle à l'axe Y sur la figure 2) est égale à une largeur W de chacun des échantillons 100.1 - 100.8, cette largeur W étant par exemple égale à 15 mm. Les électrodes de mesure 102 sont espacées les unes des autres de manière à obtenir, dans chaque échantillon 100, un ensemble de distances inter-électrodes L différentes les unes des autres. Sur un des échantillons 100, les distances entre deux électrodes de mesure 102 voisines peuvent être similaires ou non. Dans l'exemple de réalisation particulier décrit ici, les distances inter-électrodes dans chaque échantillon 100 sont égales à : 0,2 mm ; 0,7 mm ; 1,2 mm ; 1,7 mm ; 2,2 mm ; 2,7 mm ; 3,2 mm ; 3,7 mm ; 4,2 mm ; 4,7 mm ; 6,2 mm.

Les métallisations de l'un des échantillons 100 (désigné par la référence 100.1 sur la figure 2) n'incluent pas de ligne de métallisation, mais uniquement des électrodes de mesure 102. Les métallisations des autres échantillons 100 (désignés par les références 100.2 à 100.8 sur la figure 2) comportent une ou plusieurs lignes de métallisation 104 auxquelles les électrodes de mesure 102 sont couplées électriquement. Dans chacun des échantillons 100 comportant une ou plusieurs lignes de métallisation 104, cette ou ces lignes de métallisation 104 forment un chemin de conduction électrique reliant électriquement entre elles les électrodes de mesure 102 de cet échantillon 100.

Dans le premier exemple de réalisation décrit, les échantillons 100 autres que celui ne comportant pas de ligne de métallisation comportent un nombre *n* différent de lignes de métallisation 104 les uns par rapport aux autres. Sur l'exemple de la figure 2, les métallisations du deuxième échantillon 100.2 comportent une seule ligne de métallisation 104, celles du troisième échantillon 100.3 comportent deux lignes de métallisation 104, celles du quatrième échantillon 100.4 comportent trois lignes de métallisation 104, celles du cinquième échantillon 100.5 comportent quatre lignes de métallisation 104, celles du sixième échantillon 100.6 comportent cinq lignes de métallisation 104, celles du septième échantillon 100.7 comportent sept lignes de métallisation 104, et celles du huitième échantillon 100.8 comportent dix lignes de métallisation 104.

Selon un exemple de réalisation particulier, les lignes de métallisation 104 sont agencées telles qu'elles comportent leur plus grande dimension, c'est-à-dire leur longueur, orientée sensiblement perpendiculairement à la longueur des électrodes de mesure 102, comme c'est le cas sur l'exemple de la figure 2. D'autres agencements des lignes de métallisation 104 et des électrodes de mesure 102 sont possibles.

Dans chaque échantillon 100, la disposition des lignes de métallisation 104 les unes par rapport aux autres peut être telle qu'elles soient équidistantes les unes des autres, comme c'est le cas sur l'exemple de la figure 2. En variante, les lignes de métallisation 104 peuvent être agencées les unes par rapport aux autres telles que la distance les séparant soit identique dans tous les échantillons 100, indépendamment du nombre de lignes de métallisation 104 dans chaque échantillon 100. Une telle variante permet par exemple d'évaluer l'influence, au sein d'un échantillon 100, de l'espacement des lignes de métallisation 104 les unes par rapport aux autres sur les résultats de caractérisation électrique obtenus.

Selon un exemple de réalisation, les échantillons 100 sont réalisés à partir d'un même substrat 101, en déposant, au cours d'étapes communes de sérigraphie à travers un même masque, les métallisations de tous les échantillons 100. Selon un exemple, une première étape de sérigraphie peut être mise en œuvre pour former les lignes de métallisation 104, puis une deuxième étape de sérigraphie peut être mise en œuvre pour former les électrodes de mesure 102. Selon un autre exemple, une seule étape de sérigraphie peut être mise en œuvre pour former les lignes de métallisation 104 et les électrodes de mesure 102 des échantillons 100. Selon un exemple de réalisation, la pâte de sérigraphie utilisée pour la réalisation de ces métallisations comporte du cuivre. D'autres variantes de réalisation des métallisations des échantillons 100 sont possibles.

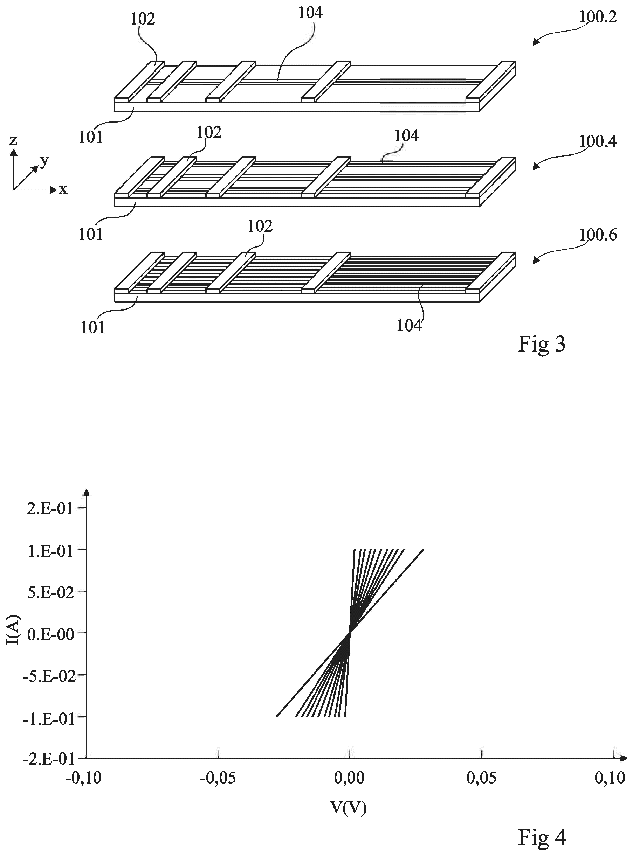

Des étapes de séchage et de recuit peuvent ensuite être mises en œuvre, puis une découpe, par exemple par laser, peut être mise en œuvre pour séparer les échantillons 100 les uns des autres. Une telle étape de découpe et de séparation des échantillons 100 les uns vis-à-vis des autres permet de limiter les fuites de courant latéral pouvant se produire depuis les bords des échantillons 100, et confiner ainsi la conduction électrique à la surface définie par l'étape de découpe pour chaque échantillon 100. La figure 3 représente schématiquement trois échantillons 100 ainsi réalisés, tels qu'obtenus après l'étape de découpe.

Lors d'une étape suivante 12, des mesures courant - tension, ou mesures I-V, sont mises en œuvre en appliquant successivement, sur chacun des échantillons 100 et pour différentes distances inter-électrodes *L*, une tension sur une paire d'électrodes de mesure 102 et en mesurant le courant obtenu entre ces électrodes de mesure 102. Ces mesures permettent d'obtenir des courbes courant-tension, ou courbes I-V, pour chaque distance inter-électrodes *L* de chacun des échantillons 100. Ces mesures I-V peuvent être mises en œuvre en appliquant une même valeur de tension entre chaque paire d'électrodes de mesure 102, et cela pour chacun des échantillons 100. Selon un exemple, les valeurs des tensions appliquées peuvent être telles que le courant mesuré soit compris entre -0,1 A et 0,1 A, limitant ainsi les risques de choc électrique ou d'échauffement des conducteurs. Les mesures I-V peuvent être faîtes à l'obscurité ou sous lumière.

La figure 4 représente des exemples de courbes I-V obtenues à partir des mesures I-V réalisées sur un des échantillons 100, pour les différentes distances inter-électrodes *L* indiquées précédemment.

Lors d'une étape suivante 14, les courbes I-V obtenues sont analysées afin de vérifier leur linéarité, et donc le comportement ohmique des échantillons 100 lors des mesures réalisées. Selon un exemple de réalisation, seules les courbes présentant une réponse linéaire sont conservées pour la suite du procédé. Les courbes non linéaires peuvent être écartées car elles peuvent être considérées comme représentatives d'un potentiel défaut ou d'un artefact survenu lors de la mesure. En variante, cette étape 14 peut ne pas être mise en œuvre.

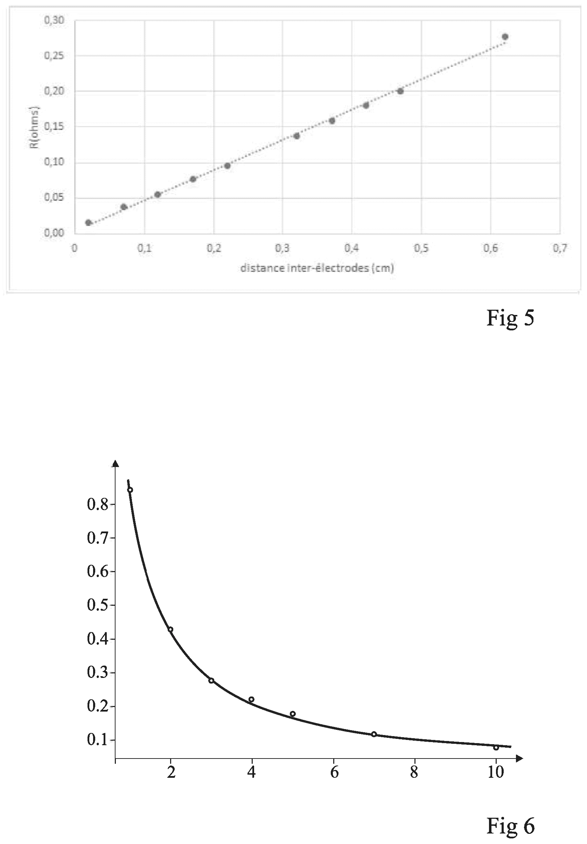

Lors d'une étape suivante 16, pour chaque échantillon photovoltaïque 100 et à partir des précédentes mesures I-V, une fonction *R_{mesurée} (L)* qui est linéaire et qui définit une valeur de la résistance mesurée *R_{mesurée}* en fonction de la distance inter-électrodes L est déterminée. En effet, étant donné le comportement ohmique observé pour chaque distance inter-électrodes et donc pour chaque courbe I-V, la résistance électrique peut être déterminée à partir de la dérivée de la courbe *I(V)*, ce qui revient à calculer la pente de chacune des courbes *I(V)* en raison de leur linéarité. Les valeurs de résistance ainsi obtenues peuvent ensuite être représentées en fonction des distances inter-électrodes, comme illustré sur la figure 5 montrant les valeurs de résistance calculées pour les différentes distances inter-électrodes sur un des échantillons 100, c'est-à-dire la fonction *R_{mesurée} (L)* d'un des échantillons 100. Sur cette figure, la fonction *R_{mesurée} (L)* est représentée en pointillés et correspond à la fonction *R_{mesurée}* = 0,4276.*L* + 0,0037.

Dans un exemple de réalisation particulier, l'échantillon 100.1 qui ne comporte pas de lignes de métallisation 104 peut être utilisé pour calculer la résistance de couche *R_{couche},* c'est-à-dire la valeur de la résistance de la couche (ou de l'empilement de couches) de matériau, ou du substrat 101, sur laquelle les métallisations sont réalisées (en Ω/carré ou Ω/sq). La valeur de *R_{couche}* peut être calculée à partir de la fonction *R_{mesurée} (L)* précédemment déterminée pour l'échantillon 100.1. La dérivée de la fonction *R_{mesurée} (L),* notée *R'_{mesurée,}* correspond à sa pente et est exprimée en Ω/cm. La valeur de *R_{couche}* peut être déterminée par l'équation suivante :
[Math 1] ${R}_{couche} = R {′}_{mesur é e} \left(n=0\right) ⋅ W$ (1) avec W correspondant à la largeur de l'échantillon 100.1 (dimension parallèle à la longueur des électrodes de mesure 102 et parallèle à l'axe Y sur les figures 2 et 3) en cm, et *R'_{mesurée} (n=0)* correspondant à la dérivée de la fonction *R_{mesurée} (L)* pour l'échantillon 100.1 ne comportant pas de ligne de métallisation 104 en Ω/cm (*n* correspondant au nombre de lignes de métallisation 104).

En complément ou en alternative au calcul de *R_{couche},* il est possible de calculer la valeur du paramètre *R_{contact},* c'est-à-dire la valeur de la résistance de contact d'une des électrodes de mesure 102 avec le matériau sur lequel les métallisations sont réalisées.

La fonction *R_{mesurée} (L)* précédemment déterminée pour l'échantillon 100.1 peut être utilisée pour le calcul de la valeur de *R_{contact}.* En considérant le circuit électrique équivalent correspondant à chaque distance inter-électrodes *L*, il est possible d'établir la relation suivante :
[Math 2] ${R}_{mesur é e} \left(L\right) = {R}_{contact} + {R}_{couche} ⋅ \frac{L}{W} + {R}_{contact}$ (2)

La résistance de contact *R_{contact}* peut être calculée à partir de l'extrapolation de la fonction *R_{mesurée} (L)* précédemment déterminée pour l'échantillon 100.1, avec, dans le cas limite de L = 0 :
[Math 3] ${R}_{contact} = {R}_{mesur é e} \left(L=0\right) / 2$ (3)

Lors d'une étape 18, pour chaque échantillon 100, la dérivée *R'_{mesurée}* de la fonction *R_{mesurée} (L)* est déterminée. Pour chaque échantillon 100, la valeur de la dérivée *R'_{mesurée}* est représentative de la valeur de la résistance de ligne *R_{ligne}* des lignes de métallisation 104 de cet échantillon 100.

Lors d'une étape 20, afin d'obtenir une valeur plus précise de la résistance de ligne *R_{ligne}* des lignes de métallisation 104 et minimiser la contribution du substrat dans les résultats obtenus, la valeur de la résistance de ligne *R_{ligne}* est déterminée, en Ω/cm, à partir de l'équation :
[Math 4] $R {′}_{mesur é e} \left(n\right) = \frac{{R}_{ligne} ⋅ R {′}_{mesur é e} \left(n=0\right)}{{R}_{ligne} + n ⋅ R {′}_{mesur é e} \left(n=0\right)}$ (4) avec *R'_{mesurée} (n=0)* correspondant à la valeur de la dérivée *R'_{mesurée}* pour l'échantillon photovoltaïque 100 ne comportant pas de ligne de métallisation 104, et *R'_{mesurée} (n)* correspondant aux valeurs des dérivées *R'_{mesurée}* pour les échantillons photovoltaïques 100 comportant n lignes de métallisation 104.

Il est donc proposé d'ajuster les points expérimentaux des dérivées *R'_{mesurée},* exprimés en Ω/cm, en fonction du nombre *n* de lignes de métallisation 104, en les confrontant à l'équation théorique qui décrit le circuit électrique équivalent de chaque échantillon 100. À partir de cet ajustement, il est alors possible d'extraire la valeur de la résistance de ligne *R_{ligne}* comme paramètre d'ajustement de ce modèle.

Pour cela, l'équation qui décrit le circuit électrique équivalent pour *n* lignes de métallisation 104, en considérant *R_{contact}* comme étant négligeable (car déjà incluse dans la mesure effectuée sur l'échantillon 100.1), est la suivante :
[Math 5] $\frac{1}{{R}_{mesur é e} \left(n\right)} = \frac{n}{{R}_{ligne} ⋅ L} + \frac{1}{{R}_{mesur é e \left(n=0\right)}}$ (5)

Dans le cas limite d'un substrat parfaitement isolant, sa résistance tend alors vers l'infini. L'équation précédente peut alors s'écrire telle que :
[Math 6] $\frac{1}{{R}_{mesur é e} \left(n\right)} = \frac{n}{{R}_{ligne} ⋅ L}$ (6)

La valeur de la résistance de ligne *R_{ligne}* peut dans ce cas être calculée telle que :
[Math 7] ${R}_{ligne} = \frac{{R}_{mesur é e} \left(n\right) ⋅ n}{L}$ (7)

Ainsi, l'équation modélisant le circuit électrique équivalent des échantillons 100 constitue une expression générale applicable tant aux échantillons 100 comprenant un substrat 101 isolant qu'à ceux comprenant un substrat 101 conducteur. Pour tous les types de substrats 101, l'équation (5) peut être réécrite en fonction des dérivées par rapport à la distance inter-électrodes *L*, ce qui permet d'utiliser les valeurs des dérivées *R'_{mesurée}* obtenues pour les différentes distances inter-électrodes décrites précédemment. L'équation décrivant le circuit électrique équivalent pour n lignes de métallisation 104 devient alors :
[Math 8] $\frac{1}{R {′}_{mesur é e} \left(n\right)} = \frac{n}{{R}_{ligne}} + \frac{1}{R {′}_{mesur é e} \left(n=0\right)}$ (8)

A partir de l'équation (8) ci-dessus, l'équation (4) précédemment mentionnée est alors obtenue.

Des exemples de valeurs de la dérivée *R'_{mesurée}* pour différentes valeurs de *n* sont donnés ci-dessous lorsque les échantillons 100 comportent un substrat 101 électriquement isolant, par exemple formé par une couche de SiOx d'épaisseur égale à 100 nm.

**[Table 1]**

| n | *R'_{mesurée}* (*n*) (Ω/cm) |
|---|---|
| 0 | 7109,89868 |
| 1 | 0,84160 |
| 2 | 0,42755 |
| 3 | 0,27694 |
| 4 | 0,22355 |
| 5 | 0,17813 |
| 7 | 0,11922 |
| 10 | 0,07692 |

La courbe obtenue à partir de ces valeurs est représentée sur la figure 6. Cette courbe, définie par l'équation (4), permet de déterminer que *R_{ligne}* = 0,846 Ω/cm avec une incertitude égale à +/- 0,006 Ω/cm, soit une incertitude équivalente à 0,7 %.

Des exemples de valeurs de la dérivée *R'_{mesurée}* pour différentes valeurs de *n* sont donnés ci-dessous lorsque les échantillons 100 comportent un substrat 101 électriquement conducteur, par exemple formé par une couche de TCO d'épaisseur égale à 100 nm.

**[Table 2]**

| n | *R'_{mesurée}*(*n*)(Ω/cm) |
|---|---|
| 0 | 8,50378 |
| 1 | 1,08542 |
| 2 | 0,52901 |
| 3 | 0,35148 |
| 4 | 0,25425 |
| 5 | 0,20221 |
| 7 | 0,14552 |
| 10 | 0,09964 |

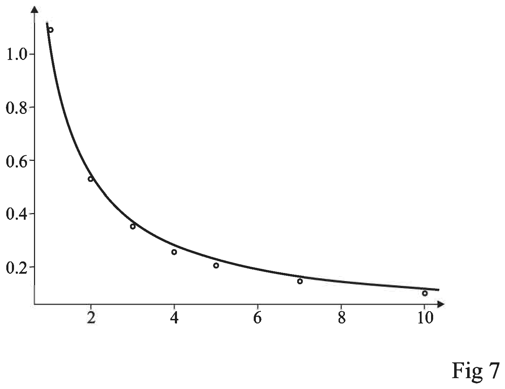

La courbe obtenue à partir de ces valeurs est représentée sur la figure 7. Cette courbe, définie par l'équation (4), permet de déterminer que *R_{ligne}* = 1,184 Ω/cm avec une incertitude égale à +/- 0,031 Ω/cm, soit une incertitude équivalente à 2,7 %.

Dans le premier exemple décrit ci-dessus, le nombre n de lignes de métallisation 104 varie d'un échantillon 100 à l'autre, et les dimensions de ces lignes 104 (la hauteur, ou épaisseur, *h₁₀₄* qui est perpendiculaire à la surface du substrat 102 sur laquelle les lignes 104 sont réalisées, et la largeur *w₁₀₄* qui est perpendiculaire à leur longueur et à leur hauteur) sont similaires d'un échantillon 100 à l'autre.

Selon un deuxième exemple de mise en œuvre du procédé, il est possible que chacun des échantillons 100 comporte le même nombre de lignes de métallisation 104, mais que les largeurs *w₁₀₄* et/ou les hauteurs *h₁₀₄* des lignes 104 varient d'un échantillon 100 à l'autre.

Une valeur de la résistance électrique totale *R*, en Ω, d'une ligne de métallisation 104 peut s'exprimer par l'équation :
[Math 9] $R = \frac{ρ ⋅ L}{S} = \frac{ρ ⋅ L}{{h}_{104} ⋅ {w}_{104}}$ (9) avec *ρ* la résistivité du matériau de la ligne de métallisation 104, en Ω.cm ; *L* la distance inter-électrodes, en cm ; *S* l'aire de la section transversale de la ligne de métallisation 104, en cm² ; *h₁₀₄* la hauteur de la ligne de métallisation 104, en cm ; *w₁₀₄* la largeur de la ligne de métallisation 104, en cm.

En considérant un paramètre *N* tel que *N = n * h₁₀₄ * w₁₀₄,* ainsi que l'équation (9) ci-dessus, l'équation (5) précédente peut s'écrire telle que :
[Math 10] $\frac{1}{{R}_{mesur é e} \left(N\right)} = \frac{N}{ρ ⋅ L} + \frac{1}{{R}_{mesur é e \left(N=0\right)}}$ (10)

Dans le cas limite d'un substrat parfaitement isolant, sa résistance tend alors vers l'infini. L'équation précédente peut alors s'écrire telle que :
[Math 11] $\frac{1}{{R}_{mesur é e} \left(N\right)} = \frac{N}{ρ ⋅ L} = > ρ = \frac{{R}_{mesur é e} \left(N\right) ⋅ N}{L}$ (11)

L'équation décrivant le circuit électrique équivalent pour n lignes de métallisation 104 devient alors :
[Math 12] $\frac{1}{R {′}_{mesur é e} \left(N\right)} = \frac{N}{ρ} + \frac{1}{R {′}_{mesur é e} \left(N=0\right)}$ (12)

L'équation (4) précédente devient alors :
[Math 13] $R {′}_{mesur é e} \left(N\right) = \frac{ρ ⋅ R {′}_{mesur é e} \left(N=0\right)}{ρ + N ⋅ R {′}_{mesur é e} \left(N=0\right)}$ (13)

Dans une telle configuration, les étapes 12 à 18, ou 12 à 20, précédemment décrites mises en œuvre en utilisant des échantillons 100 comportant des nombres de lignes de métallisation 104 différents sont similaires à celles mises en œuvre en utilisant des échantillons 100 comportant des lignes de métallisation de dimensions différentes, en utilisant toutefois les équations mentionnées ci-dessus adaptées à de tels échantillons 100. Dans ce cas, la caractérisation électrique des lignes de métallisation 104 correspond à une caractérisation de la résistivité *ρ* des lignes de métallisation 104.

Le procédé décrit ci-dessus peut s'appliquer pour la caractérisation de métallisations de cellules à hétérojonction, ou SHJ, ou s'appliquer à d'autres architectures de cellules photovoltaïques, par exemple de type TOPCon (cellules à contacts à oxyde tunnel passivé) ou tandem (combinant des couches actives à base de semi-conducteur et de matériau pérovskite). Le procédé décrit ici correspond à une méthode de caractérisation robuste, polyvalente et adaptée à différents types de technologies à contacts métalliques.

Dans l'exemple précédemment décrit, il est possible de déterminer la valeur de *R_{couche}* à partir de l'échantillon 100 qui ne comporte pas de ligne de métallisation 104. Selon un exemple de mise en œuvre, cet échantillon 100 ne comportant pas les lignes de métallisation 104 peut être réalisé en deux exemplaires, un au centre du substrat utilisé pour la réalisation des échantillons 100 et l'autre au niveau d'un des bords du substrat. Ainsi, il est possible d'évaluer l'homogénéité de la résistance de couche *R_{couche}* sur l'ensemble de la surface du substrat utilisé, et détecter d'éventuelles hétérogénéités dans les dépôts réalisés.

Le procédé décrit permet une caractérisation électrique précise des lignes de métallisation 104 à partir de motifs de métallisations avec un nombre n variable de lignes de métallisation 104 et/ou des dimensions variables des lignes de métallisation 104 qui connectent différents contacts correspondant à des électrodes de mesure 102 et espacés les uns des autres par différentes distances inter-électrodes. Cette approche permet de négliger la contribution de la conductivité électrique du substrat sur les mesures, et permet une application du procédé à différents types de substrat.

Les métallisations des échantillons photovoltaïques peuvent être réalisées par sérigraphie sur un même substrat et en utilisant un seul écran comportant notamment des ouvertures de lignes de largeurs différentes.

Dans le procédé décrit, contrairement aux structures utilisées lors d'une mesure TLM dans lesquelles les contacts sont reliés électriquement entre eux uniquement par le substrat conducteur sur lequel les contacts sont disposés (généralement à base d'oxyde conducteur transparent, TCO, dans le cas des cellules à hétérojonction, SHJ), les échantillons photovoltaïques 100 sont dotés de différents nombres de lignes de métallisation 104 et/ou de lignes de métallisation 104 de dimensions différentes interconnectant électriquement les électrodes de mesure 102 entre elles. Les résultats expérimentaux peuvent ensuite être analysés en modélisant les échantillons photovoltaïques 100 comme des ensembles de *n* lignes conductrices disposées en parallèle les unes des autres et déposées sur un substrat conducteur. Cette modélisation permet d'ajuster les données expérimentales à l'équation décrivant le comportement électrique des échantillons photovoltaïques 100, ce qui permet de caractériser électriquement de manière précise les lignes de métallisation 104. Ainsi, la contribution du substrat à la conduction électrique latérale dans les échantillons photovoltaïques 100 peut être écartée dans le processus de caractérisation électrique des lignes de métallisation 104.

Le procédé décrit permet par exemple d'extraire de manière conjointe les valeurs de la résistance de ligne *R_{ligne}* et/ou de la résistivité *ρ* des lignes de métallisation 104, et également la valeur de la résistance de couche *R_{couche}* et celle de la résistance de contact *R_{contact}.* Le procédé décrit peut être combiné à des mesures TLM classiques. Le procédé décrit permet de quantifier les pertes résistives dans une cellule photovoltaïque, et déterminer l'impact de ces pertes sur les performances de la cellule photovoltaïque.

Le procédé décrit permet de caractériser électriquement des lignes de métallisation avec un nombre d'échantillons photovoltaïques limité. Le procédé décrit permet, par rapport aux procédés connus de détermination de la résistance de ligne, d'obtenir un gain de temps et de ressources expérimentales grâce à la réduction des coûts et du temps de fabrication des échantillons photovoltaïques 100, de réduire la quantité de matériaux consommés et d'augmenter l'efficacité des itérations expérimentales et accélérer ainsi les cycles d'optimisation des métallisations des cellules PV.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Procédé de caractérisation électrique de métallisations, comprenant au moins la mise en œuvre de :
- mesures courant - tension (12) mises en œuvre sur chacun d'une pluralité d'échantillons photovoltaïques (100) comprenant chacun un nombre n de lignes de métallisation (104) de largeur *w₁₀₄* et de hauteur *h₁₀₄,* les échantillons photovoltaïques (100) comprenant, les uns par rapport aux autre, un nombre *n* différent de lignes de métallisation (104) et/ou des lignes de métallisation (104) de largeurs *w₁₀₄* et/ou de hauteurs *h₁₀₄* différentes, chacun des échantillons photovoltaïques (100) comprenant en outre plusieurs électrodes de mesure (102) espacées les unes des autres en formant différentes valeurs de distance inter-électrodes *L* pour chacune desquelles une mesure courant - tension est mise en œuvre ;
- détermination (16), pour chaque échantillon photovoltaïque (100) et à partir des précédentes mesures courant - tension, d'une fonction *R_{mesurée} (L)* qui est linéaire et définit une valeur de résistance *R_{mesurée}* en fonction de la distance inter-électrodes *L* ;
- détermination (18), pour chaque échantillon photovoltaïque (100), d'une valeur *R'_{mesurée}* correspondant à la dérivée de la fonction *R_{mesurée} (L).*

2. Procédé selon la revendication 1, comportant en outre, après la détermination (18) de la valeur *R'_{mesurée}* pour chaque échantillon photovoltaïque (100), une détermination (20) d'une résistivité *ρ*, en Ω.cm, des lignes de métallisation (104) à partir de l'équation : $R {′}_{mesurée} \left(N\right) = \frac{ρ ⋅ R {′}_{mesurée} \left(N=0\right)}{ρ + N ⋅ R {′}_{mesurée} \left(N=0\right)}$ avec *R'_{mesurée} (N=0)* correspondant à la valeur *R'_{mesurée}* pour l'un des échantillons photovoltaïques (100) ne comportant pas de ligne de métallisation (104), et *R'_{mesurée} (N)* correspondant à la valeur *R'_{mesurée}* pour l'un des échantillons photovoltaïques (100) de paramètre *N* avec *N = n.h₁₀₄.w₁₀₄.*

3. Procédé selon l'une quelconque des revendications précédentes, comportant en outre, lorsque les échantillons (100) ont un nombre *n* de lignes de métallisation (104) différent les uns des autres et des lignes de métallisation (104) de largeurs *w₁₀₄* et de hauteurs *h₁₀₄* identiques les unes des autres, et après la détermination (18) de la valeur *R'_{mesurée}* pour chaque échantillon photovoltaïque (100), une détermination (20) de la valeur d'une résistance de ligne *R_{ligne},* en Ω/cm, des lignes de métallisation (104) à partir de l'équation : $R {′}_{mesurée} \left(n\right) = \frac{{R}_{ligne} ⋅ R {′}_{mesurée} \left(n=0\right)}{{R}_{ligne} + n ⋅ R {′}_{mesurée} \left(n=0\right)}$ avec *R'_{mesurée} (n=0)* correspondant à la valeur *R'_{mesurée}* pour l'un des échantillons photovoltaïques (100) ne comportant pas de ligne de métallisation (104), et *R'_{mesurée} (n)* correspondant à la valeur *R'_{mesurée}* pour l'un des échantillons photovoltaïques (100) comportant *n* lignes de métallisation (104).

4. Procédé selon l'une quelconque des revendications précédentes, dans lequel les mesures courant - tension (12) sont mises en œuvre, sur chacun des échantillons photovoltaïques (100), en appliquant une même valeur de tension entre deux des électrodes de mesure (102).

5. Procédé selon l'une quelconque des revendications précédentes, comprenant en outre, avant la mise en œuvre des mesures courant - tension (12), une réalisation (10) des échantillons photovoltaïques (100).

6. Procédé selon la revendication 5, dans lequel la réalisation (10) des échantillons photovoltaïques (100) comporte au moins la mise en œuvre des étapes de :
- dépôt, par exemple par sérigraphie à travers au moins un masque, d'au moins une pâte de sérigraphie sur au moins un substrat (101), formant les métallisations (102, 104) des échantillons photovoltaïques (100) ;
- recuit de la pâte de sérigraphie déposée ;
- découpe du substrat (101), détachant les échantillons photovoltaïques (100) les uns des autres.

7. Procédé selon la revendication 6, dans lequel les métallisations (102, 104) des échantillons photovoltaïques (100) sont réalisées avec un unique masque de sérigraphie.

8. Procédé selon l'une quelconque des revendications précédentes, dans lequel les métallisations (102, 104) comportent du cuivre.

9. Procédé selon l'une quelconque des revendications précédentes, dans lequel la détermination (16), pour chaque échantillon photovoltaïque (100) , de la fonction *R_{mesurée}(L)* est réalisée à partir des mesures courant - tension dont les résultats correspondent à des fonctions linéaires et en écartant celles dont les résultats correspondent à des fonctions non-linéaires.

10. Procédé selon l'une quelconque des revendications précédentes, dans lequel les étapes sont mises en œuvre à partir d'au moins deux échantillons photovoltaïques (100) dont l'un ne comporte pas de ligne de métallisation (104).

11. Procédé selon l'une quelconque des revendications précédentes, dans lequel chacun des échantillons photovoltaïques (100) comporte au moins trois électrodes de mesure (104) formant au moins deux distances inter-électrodes différentes.

12. Procédé selon l'une quelconque des revendications précédentes, comportant en outre un calcul d'une résistance de couche *R_{couche}* selon l' équation : ${R}_{couche} = R {′}_{mesur é e} \left(n=0\right) ⋅ W$ avec *W* correspondant à une largeur d'un des échantillons photovoltaïques (100) qui ne comporte pas de ligne de métallisation (104).

13. Procédé selon l'une quelconque des revendications précédentes, comportant en outre, pour l'un des échantillons photovoltaïque (100) ne comportant pas de ligne de métallisation (104), un calcul d'une résistance de contact *R_{contact}* selon l'équation : ${R}_{contact} = {R}_{mesurée} \left(L=0\right) / 2$ avec *R_{mesurée} (L=0)* correspondant à la valeur de la résistance *R_{mesurée}* extrapolée à partir de la fonction *R_{mesurée} (L)* pour une distance inter-électrodes nulle.

14. Procédé selon l'une quelconque des revendications précédentes, dans lequel chacun des échantillons photovoltaïques (100) comporte un substrat (101) comprenant au moins une couche de semi-conducteur cristallin disposée entre au moins deux couches de semi-conducteur amorphe ou microcristallin, ou entre des contacts à oxyde tunnel passivé.

15. Procédé selon l'une quelconque des revendications précédentes, dans lequel les lignes de métallisation (104) sont orientées perpendiculaires aux électrodes de mesure (102) .
